## Europäisches Patentamt

## European Patent Office

## Office européen des brevets

(11) Veröffentlichungsnummer: **0 137 940**
**A2**

## (12) EUROPÄISCHE PATENTANMELDUNG

(21) Anmeldenummer: 84109213.3

(22) Anmeldetag: 03.08.84

(51) Int. Cl.⁴: **C 08 F 8/46**

(30) Priorität: 01.10.83 DE 3335706

(43) Veröffentlichungstag der Anmeldung: 24.04.85
Patentblatt 85/17

(84) Benannte Vertragsstaaten: BE CH DE FR GB IT LI NL

(71) Anmelder: CHEMISCHE WERKE HÜLS AG, - RSP
Patente / PB 15 - Postfach 13 20, D-4370 Marl 1 (DE)

(72) Erfinder: Dröscher, Michael, Dr., Hetkerbruch 34,
D-4270 Dorsten 11 (DE)
Erfinder: Bartz, Wilfried, Dr., Stargarder Strasse 12,
D-4370 Marl (DE)
Erfinder: Burzin, Klaus, Dr., Wellerfeldweg 164,
D-4370 Marl (DE)
Erfinder: Gerth, Christian, Dr., In der Thiebrei 80,
D-4358 Haltern (DE)
Erfinder: Jadamus, Hans, Dr., Hervester Strasse 8,
D-4370 Marl (DE)
Erfinder: Horlbeck, Gernot, Dr., In der Thiebrei 80,
D-4358 Haltern (DE)

(54) Verfahren zur Herstellung eines funktionalisierten Poly-alpha-olefinkautschuks und seine Verwendung zur Herstellung von schlagzähen, thermoplastischen Massen.

(57) Die Anmeldung betrifft neue Umsetzungsprodukte (Addukte) von Poly-α-olefinkautschuken, Maleinsäureanhydrid und Di-($C_1$- bis $C_{10}$-alkyl)-estern der Maleinsäure und/oder Fumarsäure und ihre Verwendung als schlagzäh machende Komponente bei der Herstellung von schlagzähen, thermoplastischen Massen auf Basis von gesättigten, thermoplastischen Polyestern und/oder Polyamiden.

0137940

## Verfahren zur Herstellung eines funktionalisierten Poly-$\alpha$-olefinkautschuks und seine Verwendung zur Herstellung von schlagzähen, thermoplastischen Massen

Es ist bekannt, schlagzähe, thermoplastische Massen aus gesättigten, thermoplastischen Polyestern oder Polyamiden einerseits und Poly-$\alpha$-olefinkautschuk-Maleinsäureanhydrid-Addukten als schlagzäh machende Komponente andererseits herzustellen (DE-OS 26 22 876, EP-PS 13 941, DE-AS 26 22 973 und EP-PS 9 757).

Die schlagzäh machende Komponente soll möglichst hell sein und einen Gelgehalt von <3, vorzugsweise < 2 Massen-%, bestimmt nach der in der DE-OS 24 01 149, Anspruch 14, angegebenen Methode, aufweisen. Sie soll eine hohe spezifische Wirkung in den schlagzähen, thermoplastischen Massen aufweisen (Kerbschlagzähigkeit $a_k$ nach DIN 53 453 an Normkleinstäben mit Rechteckkerbe). Sie soll mit diesen Eigenschaften reproduzierbar und wirtschaftlich erhältlich sein.

In der DE-OS 24 01 149 wird ein Verfahren zur Herstellung von Poly-$\alpha$-olefinkautschuk-Maleinsäureanhydrid-Addukten beschrieben. Die Addukte sind mehr oder weniger stark verfärbt und weisen in der Regel einen Gelgehalt von 3 bis 5 Massen-% auf.

Die Aufgabe bestand darin, ein verbessertes Verfahren zur Herstellung der schlagzäh machenden Komponente bereitzustellen (I).

0137940
O.Z. 3944

Die Aufgabe bestand darüber hinaus darin, ein verbessertes Verfahren zur Herstellung der schlagzähen, thermoplastischen Massen bereitzustellen (II).

Die Aufgabe wurde überraschenderweise wie in den Patentansprüchen angegeben gelöst.

I. Die nach dem Verfahren der Patentansprüche 1 und 2 erhaltenen Verfahrenserzeugnisse sind neu.

Die eingesetzten Poly-$\alpha$-olefinkautschuke können als amorpher Typ, Sequenz-Typ oder gemischter Typ vorliegen.

Ein geeigneter Radikalbildner ist beispielsweise Tertiärbutylperbenzoat.

Im Falle des Einsatzes eines Kautschuks mit einem Gehalt von $\geq$ 2 olefinischen Doppelbindungen/1 000 C-Atome kann die Umsetzung in Gegenwart eines Radikalbildners mit einer Zersetzungstemperatur von > 200 °C durchgeführt werden.

Die Kautschuke werden im allgemeinen als Pulver, Krümel oder Granulat eingesetzt und können $\leq$ 5 Massen-% eines Trennpulvers, wie beispielsweise Polyethylen, Talkum oder Aerosil, enthalten.

Ein bevorzugter Diester ist Fumarsäuredi-n-butylester.

Bei einer bevorzugten Verfahrensvariante wird zunächst bei Raumtemperatur eine Mischung aus Kautschuk, MSA und Diester hergestellt und dann diese Mischung in den Reaktor gegeben, in dem die gewünschte Umsetzung stattfindet.

Bei einer weiteren bevorzugten Verfahrensvariante wird zunächst bei Raumtemperatur eine Mischung aus MSA und Diester hergestellt und dann diese Mischung im Reaktor mit dem Kautschuk vereinigt.

Der Reaktor ist im allgemeinen ein kontinuierlich oder diskontinuierlich betriebener Kneter.

Im allgemeinen beträgt die Reaktionszeit bei der kontinuierlichen Fahrweise 1 bis 5 min und bei der diskontinuierlichen Fahrweise 5 bis 20 min.

Das Verfahren gemäß den Patentansprüchen 1 und 2 zeichnet sich durch den Vorteil aus, daß bei der Handhabung des MSA unter wirtschaftlichen Bedingungen in geringerem Maße physiologisch bedenkliche, lästige Stäube entstehen als bei dem Verfahren des Standes der Technik.

II. In den Poly(alkylenterephthalat)en können $\leq$ 20 Mol-% der Terephthalsäure durch andere übliche Dicarbonsäuren, wie beispielweise Isophthalsäure, Phthalsäure, Cyclohexan-1,4-dicarbonsäure, Adipinsäure, Azelainsäure und Decandicarbonsäure, ersetzt sein.

Im Poly(ethylenterephthalat) können $\leq$ 20 Mol-% des Ethylenglykols durch andere übliche Diole, wie beispielsweise Butandiol-(1,4), Propandiol-(1,3), Hexandiol-(1,6), Neopentylglykol, 1,4-Dimethylolcyclohexan und Dodecandiol-(1,12) ersetzt sein.

Im Poly(butylenterephthalat) können $\leq$ 20 Mol-% des Butandiol-(1,4) durch andere übliche Diole, wie beispielsweise Ethylenglykol, Propandiol-(1,3), Hexandiol-(1,6), Neopentylglykol, 1,4-Dimethylolcyclohexan und Doedecandiol-(1,12) ersetzt sein.

Bevorzugte Poly(alkylenterephthalat)e sind Poly(ethylenterephthalat) und Poly(butylenterephthalat).

Geeignete Polyamide sind teilkristalline Homopolyamide, wie beispielsweise PA 6, 11, 12, 66, 68, 69, 610 und 612, und ihre Modifikationen mit weiteren üblichen Dicarbonsäuren, Diaminen oder Aminocarbonsäuren, sowie amorphe Polyamide, die aromatische Dicarbonsäuren und cycloaliphatische Diamine enthalten können.

Die Umsetzung der gesättigten, thermoplastischen Polyester und Polyamide mit der schlagzäh machenden Komponente erfolgt in der Schmelze und in bekannter Weise, beispielsweise in einem Doppelschneckenkneter, der vorteilhafterweise mit Knetblöcken ausgerüstet ist, oder in einem Entgasungsextruder.

Geeignete Füllstoffe sind beispielsweise Mineralien, Mikroglaskugeln, Ruß und Pigmente.

Geeignete Hilfsmittel sind beispielsweise Stabilisatoren und Verarbeitungshilfsmittel.

Im Falle der Massen, welche Polyester, insbesondere Poly(alkylenterephthalat)e, enthalten, ist es zur weiteren Verbesserung der Schlagzähigkeit in der Kälte vorteilhaft, die nach der Umsetzung erhaltene Masse einer thermischen Nachbehandlung zu unterziehen. Diese ist besonderes dann vorteilhaft, wenn geringe Anteile der schlagzäh machenden Komponente eingesetzt wurden. Dazu erwärmt man die als Granulat vorliegende Masse in Abwesenheit von Sauerstoff (Stickstoffstrom oder Vakuum) während mehrerer Stunden, vorzugsweise in einem Fließbett, auf eine Temperatur von $\geq 5$ °C unterhalb der Temperatur, bei welcher die Masse zu schmelzen beginnt. Die thermische Nachbehandlung kann auch vorteilhaft nach den in den DE-PSS 30 33 468 und 33 33 469 beschriebenen Methoden durchgeführt werden. Die thermische Nachbehandlung kann auch in einem Entgasungsextruder durchgeführt werden. *BP*

Patentansprüche:

1. Verfahren zur Herstellung eines funktionalisierten Poly-$\alpha$-olefinkautschuks durch

   a  Umsetzung des diesem zugrunde liegenden Kautschuks mit Maleinsäureanhydrid (MSA) in Abwesenheit von Kohlenwasserstoff-Lösemitteln und bei einer Temperatur von >250 bis 330 °C zu einem Addukt,

   b  wobei der eingesetzte Kautschuk eine Mooney-Viskosität ($ML_{1+4}$, 100 °C, DIN 53 523) von 30 bis 130 aufweist und

   c  durch Copolymerisation von 50 bis 85 Massen-% Ethen und 15 bis 50 Massen-% Propen und/oder Buten-(1), bezogen auf Monoene, und gegebenenfalls eines oder mehrerer Multiene mit isolierten Doppelbindungen, von denen nur eine copolymerisationsfähig ist, erhalten ist, wobei die Menge der Multiene so bemessen ist, daß der Kautschuk <15 olefinische Doppelbindungen/1 000 C-Atome enthält,

dadurch gekennzeichnet, daß

   d  als weitere Komponente bei der Umsetzung des Kautschuks ein oder mehrere Maleinsäure- und/oder Fumarsäure-di-($C_1$- bis $C_{10}$-alkyl)-ester bei einem Massenverhältnis von MSA und Diester von 1 : 5 bis 1 : 0,5 eingesetzt werden,

   e  im Falle des Einsatzes eines Kautschuks mit einem Gehalt von <2 olefinischen Doppelbindungen/1 000 C-Atome die Umsetzung in Gegenwart eines Radikalbildners mit einer Zerfallstemperatur von > 200 °C durchgeführt wird, und

   f  die Verfahrensparameter so eingestellt werden, daß das Addukt 0,5 bis 7,5 Massen-% an angelagertem MSA und Diester enthält.

0.137940

O.Z. 3944

2. Verfahren nach Anspruch 1,
   dadurch gekennzeichnet, daß

   a  die Temperatur bei der Umsetzung des Kautschuks
   270 bis 315 °C ist,

   b  der eingesetzte Kautschuk eine Mooney-Viskosität
   von 35 bis 110 aufweist,

   c  und durch Copolymerisation von 60 bis 80 Massen-%
   Ethen und 20 bis 40 Massen-% Propen und/oder
   Buten-(1), bezogen auf Monoene, und eines
   oder mehrerer der Multiene aus der Gruppe, bestehend aus 5-Ethylidennorbornen-(2), 5-Methylen-
   6-methylnorbornen-(2), Dicyclopentadien und
   Hexadien-(1,4), erhalten ist und
   die Menge der Multiene so bemessen ist, daß der
   Kautschuk 2 bis 8 olefinische Doppelbindungen/
   1 000 C-Atome enthält,

   d  als weitere Komponente bei der Umsetzung des
   Kautschuks ein oder mehrere Maleinsäure- und/oder
   Fumarsäure-di-($C_2$- bis $C_5$-alkyl)-ester bei einem
   Massenverhältnis von MSA und Diester von 1 : 3
   bis 1 : 1 eingesetzt werden und

   e  die Verfahrensparameter so eingestellt werden,
   daß das Addukt 1 bis 5 Massen-% an angelagertem
   MSA und Diester enthält.

3. Verfahren zur Herstellung von schlagzähen, thermoplastischen Massen durch

   a  Umsetzung von 60 bis 95 Massen-% von einem oder
   mehreren gesättigten thermoplastischen Polyestern
   und/oder Polyamiden mit 5 bis 40 Massen-% von einem
   oder mehreren, gemäß dem Oberbegriff von Anspruch 1
   enthaltenen Addukten, bezogen auf die Summe von
   Thermoplast und Addukt, als schlagzäh machende
   Komponente,

   b  gegebenenfalls in Gegenwart von Füllstoffen und
   Hilfsmitteln, wobei organische Diisocyanate ausgeschlossen sind, und in bekannter Weise,

dadurch gekennzeichnet, daß

c als schlagzäh machende Komponente ein oder mehrere Addukte gemäß Anspruch 1 eingesetzt werden.

4. Verfahren nach Anspruch 3,
dadurch gekennzeichnet, daß

a 75 bis 90 Massen-% von einem oder mehreren linearen Poly(alkylenterephthalat)en und/oder Polyamiden mit 10 bis 25 Massen-% von einem oder mehreren, gemäß Anspruch 2 erhaltenen Addukten umgesetzt werden,

b wobei die Viskositätszahl (J-Wert) der eingesetzten Poly(alkylenterephthalat)e (0,5 g in 100 cm³ Phenol/o-Dichlorbenzol (Massenverhältnis 1 : 1), 25 °C, DIN 16 779, Teil 2) 80 bis 240 $[cm^3/g]$ und die relative Lösungsviskosität der eingesetzten Polyamide (0,5 g in 100 cm³ m-Kresol, 25 °C, DIN 53 727) 1,2 bis 2,4 sind. *TSP*